**Europäisches Patentamt**

**European Patent Office**

**Office européen des brevets**

(11) Numéro de publication: **0 008 257**
**B1**

(12) **FASCICULE DE BREVET EUROPEEN**

(45) Date de publication du fascicule de brevet: **04.11.81**

(21) Numéro de dépôt: **79400505.8**

(22) Date de dépôt: **17.07.79**

(51) Int. Cl.³: **F 16 K 17/02, F 16 T 1/20**

(54) **Soupape muni d'un dispositif de récupération de condensats.**

(30) Priorité: **10.08.78 FR 7823608**

(43) Date de publication de la demande:
**20.02.80 Bulletin 80/4**

(45) Mention de la délivrance du brevet:
**04.11.81 Bulletin 81/44**

(84) Etats Contractants Désignés:
**DE FR GB**

(56) Documents cités:
**US - A - 2 679 855**

(73) Titulaire: **FMC EUROPE S.A. Société anonyme dite:**
**Route des Clérimois B.P.91**
**F-89103 Sens (FR)**

(72) Inventeur: **Solowy, Jean**
**26, Résidence R. Binet**
**F-89100 Sens (FR)**

(74) Mandataire: **Rinuy, Guy et al,**
**Cabinet Rinuy et Santarelli 14, Avenue de la**
**Grande Armée**
**F-75017 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Soupape munie d'un dispositif de récupération de condensats

La présente invention concerne les soupapes destinées notamment à fonctionner en présence de fluides pour lesquels la température de stockage est supérieure à la température ambiante et provoque de ce fait la formation de condensats, et plus précisément des soupapes munies d'un dispositif de récupération de condensats.

En effet, certaines soupapes de sûreté connues du type à diaphragme et à valve pilote, par exemple des soupapes pour fonctionnement "pression pilotée-dépression bloquée" avec collecteur de soupape à évacuation dans l'atmosphère, des soupapes pour fonctionnement "pression pilotée-dépression bloquée" à évacuation dans un gazomètre, des soupapes pour fonctionnement "pression pilotée-dépression pilotée", etc., comportent une chambre d'entrée constituée par un conduit d'arrivée du fluide, une chambre de décharge pour l'évacuation du fluide qui est isolée de la chambre d'entrée en position de fermeture par un obturateur mobile, et une chambre supérieure servant à la commande de la soupape et qui est séparée de la chambre d'entrée également par l'obturateur mobile et isolée de la chambre de décharge par un diaphragme dont est solidaire l'obturateur dans laquelle peut se former un condensat dans certaines conditions de température et de pression. Pour illustrer l'arrière-plan technologique, on peut se reporter au brevet américain 2.679.855 W. A. RAY qui décrit une soupape de balayage permettant l'évacuation de particules liquides en suspension dans un gaz.

L'invention n'est pas limitée à ces soupapes, et est applicable à d'autres soupapes comportant trois chambres dont l'une peut contenir un condensat qu'il est nécessaire d'évacuer vers l'une des deux autres en fonction de la pression qui règne dans chacune d'elles.

A cet effet, l'invention concerne une soupape, destinée à fonctionner en présence d'un fluide susceptible de former un condensat, comportant des chambres dont au moins une d'où le condensat doit être évacué, et munie à cet effet d'un dispositif de récupération de condensat, les dites chambres, en fonction de la pression qui règne dans chacune d'elles pouvant être au moins temporairement séparées et/ou isolées par des moyens d'obturation tel qu'un obturateur porté par un diaphragme, appareil caractérisé en ce que le dispositif de récupération de condensats est fixé aux moyens d'obturation et comporte un corps et des organes formant clapets logés chacun à l'intérieur d'une cavité du corps, ces cavités communiquant entre elles par une gorge creusée dans le corps, et étant reliées par des conduits respectifs débouchant à leur partie inférieure chacune à une chambre, les dits organes formant clapets empêchant toute communication entre les cavités et le conduit correspondant en l'absence de condensat à évacuer, de telle sorte que, lorsque le niveau de condensat dans le conduit relié à la chambre d'où le condensat doit être évacué atteint une hauteur prédéterminée, la pression due à cette hauteur de condensat soulève l'organe formant clapet se trouvant dans la cavité correspondante et permette l'introduction de condensat dans les cavités et la gorge du corps, et que lorsque le niveau du condensat atteint dans le corps une hauteur fixée, la force due à la poussée d'Archimède fasse flotter l'organe formant clapet dans la cavité reliée à la chambre dans laquelle la pression est la moins faible, entraînant ainsi l'évacuation du condensat dans cette chambre.

L'invention sera décrite plus en détail en regard des dessins annexés à titre d'exemple non limitatif sur lesquels:

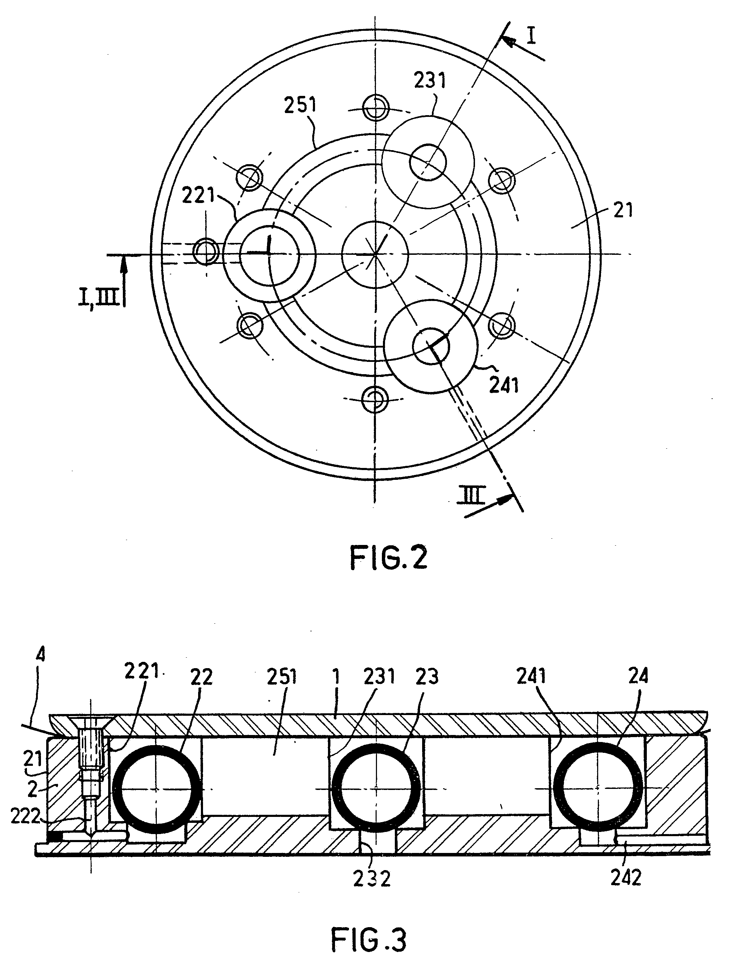

— la figure 1 est une vue partielle en coupe d'une soupape selon l'invention, dans laquelle l'obturateur et son dispositif de récupération de condensats sont coupés selon la ligne I—I de la figure 2;

— la figure 2 est une vue de dessus du corps du dispositif de récupération de condensats; et

— la figure 3 est une section selon la ligne III—III de la figure 2, de l'obturateur et son dispositif de récupération de condensats.

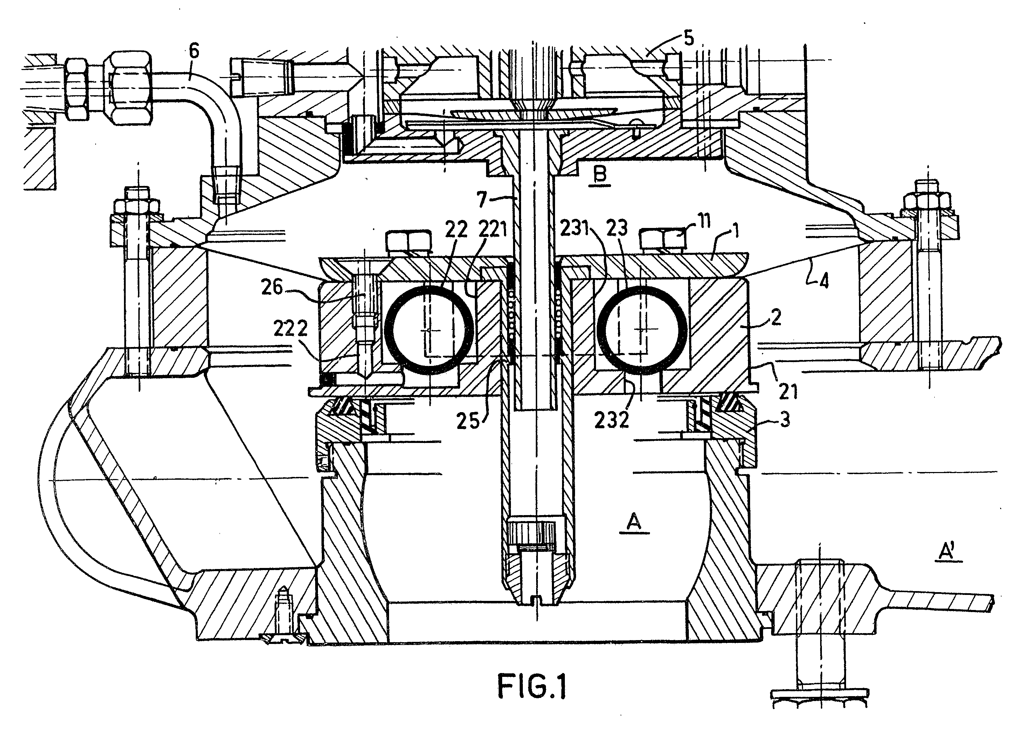

La figure 1 montre une partie d'une soupape de sûreté destinée à équiper une installation de stockage de fluide tel que de l'hexane à une température de 80 à 90°C environ, sous une pression de l'ordre de $3.10^4$ pascals (soit 300 g/cm²).

Cette soupape comporte une chambre d'entrée A déterminée par un conduit d'arrivée relié à la partie de l'installation à protéger, une chambre de décharge A' pour l'évacuation du fluide et qui est reliée soit à l'atmosphère, soit à un gazomètre, et une chambre supérieure B servant à la commande de la soupape.

La chambre d'entrée A et la chambre de décharge A' peuvent, sur commande, être séparées ou mises en communication grâce à un obturateur 1 constitué par une contre-plaque mobile entre une position de fermeture et une position d'ouverture maximale et muni d'un dispositif de récupération de condensats 2 destiné à reposer sur un siège 3 prévu sur le conduit d'arrivée lorsque ledit obturateur est en position de fermeture, la chambre de décharge A' étant délimitée par la paroi extérieure du corps de la soupape et par un diaphragme flexible 4 dont est solidaire l'obturateur 1; le diaphragme flexible 4 et le carter supérieur de la soupape fixé au corps de celle-ci délimitent la chambre supérieure B dans laquelle un condensat est susceptible de se former compte tenu des conditions de température et de pression; lorsque le

2

diaphragme flexible 4 est de forme générale tronconique, notamment en position de fermeture, ce condensat se localise à sa partie centrale inférieure, d'où il peut être évacué par le dispositif de récupération 2 prévu à cet effet qui est placé sous l'obturateur 1 auquel il est fixé, par exemple par vissage, de l'autre côté du diaphragme.

La soupape est commandée de manière connue par une valve pilote 5 dont seule la partie inférieure est représentée sur la figure 1.

En fonction des impératifs à satisfaire, la soupape de sûreté peut être agencée de différentes manières. Par exemple, pour un fonctionnement "pression pilotée-dépression bloquée", un clapet anti-retour (seulement ébauché sur la figure 1) comportant deux chambres séparées par un diaphragme flexible peut être prévu, l'une des chambres étant reliée par un conduit 6 à la chambre supérieure B, et l'autre chambre étant reliée soit à l'atmosphère, dans le cas d'une évacuation du fluide dans l'atmosphère, soit à la chambre de décharge A', dans le cas d'une évacuation du fluide dans un gazomètre, pour en recevoir une contre-pression; pour un fonctionnement "pression pilotée-dépression pilotée", une valve pilote auxiliaire (non représentée) peut être prévue, reliée d'une part à la chambre supérieure B, d'autre part à l'enceinte à protéger, par exemple dans la chambre d'entrée A, et éventuellement à la chambre de décharge A' (cas de l'évacuation du fluide dans un gazomètre).

Bien entendu, de manière classique, l'expression fonctionnement "pression pilotée-dépression bloquée" désigne le fonctionnement d'une soupape ouverte par une valve pilote lorsque la surpression dans l'enceinte à protéger atteint une valeur prédéterminée (afin d'évacuer le fluide en excès pour éviter toute explosion) et restant fermée pour des surpressions inférieures ou en cas de dépression dans l'enceinte, et l'expression fonctionnement "pression pilotée-dépression pilotée" désigne le fonctionnement d'une soupape ouverte par une valve pilote lorsque la surpression dans l'enceinte à protéger atteint une valeur prédéterminée (afin d'évacuer le fluide en excès) et également ouverte par exemple par une autre valve pilote lorsque survient dans l'enceinte une dépression prédéterminée (afin d'introduire de l'air atmosphérique pour éviter toute implosion), et restant fermée pour une pression comprise entre la surpression et la dépression prédéterminées.

Comme il a déjà été mentionné, l'obturateur 1 est muni d'un dispositif de récupération de condensats 2 qui est solidarisé audit obturateur par des vis d'assemblage 11; ce dispositif de récupération de condensats 2 est constitué essentiellement par un corps 21 et des organes tels que des boules 22, 23, 24, ici creuses, formant clapets et logés à cet effet dans des logements (ici cylindriques) respectifs 221, 231, 241 reliés respectivement à la chambre supérieure B, la chambre d'entrée A et la chambre de décharge A' par des conduits respectifs 222, 232, 242 débouchant à la partie inférieure des dits logements cylindriques, de telle sorte que les orifices de ces conduits 222, 232, 242 débouchant dans le logement correspondant puissent être obturés par la boule qui s'y trouve; naturellement, les organes formant clapet peuvent se présenter sous n'importe quelle autre forme appropriée, par exemple sous forme cylindrique, creuse ou non; les trois logements cylindriques 221, 231, 214 répartis ici à 120° sur une circonférence dans le corps 21, communiquent l'un avec l'autre par une gorge 251 usinée le long de ladite circonférence et de largeur plus faible que le diamètre des boules afin que celles-ci ne puissent quitter leur logement cylindrique. A leur partie supérieure, les logements cylindriques sont fermés par le diaphragme flexible 4 qui sépare, comme il a été vu, le dispositif de récupération de condensats 2 de l'obturateur 1. L'obturateur 1, le diaphragme flexible 4 et le dispositif de récupération de condensats 2 forment un ensemble mobile muni, de plus, d'un dispositif de guidage 25 destiné à recevoir le tube de guidage 7 servant à transmetre à la valve pilote 5 le fluide prélevé de la chambre d'entrée A. Pour des raisons pratiques, le conduit 222 reliant le logement 221 à la chambre supérieure B est fileté de manière à recevoir une vis 26 percée d'un trou central pour transmettre le condensat de ladite chambre supérieure B au logement 221. Il est bien entendu possible d'usiner dans l'obturateur 1 et ici dans la vis 26 une gorge, un plat ou toute autre cavité ayant pour but de diminuer le niveau de condensat à partir duquel ledit condensat peut pénétrer dans le conduit 222.

En pression, la chambre d'entrée A et la chambre supérieure B sont en surpression par rapport à la chambre de décharge A' qui est à la pression atmosphérique ou à celle du gazomètre; aussi, lorsque le condensat dans le conduit 222 atteint dans ledit conduit une hauteur h prédéterminée, la force due à la pression résultant de la hauteur de condensat et s'exerçant de bas en haut sur la boule 22 arrive à vaincre la force antagoniste résultant notamment de la masse de ladite boule 22, et soulève donc cette dernière, permettant au condensat de pénétrer à l'intérieur du corps 21 et notamment des logements 221, 231, 241 et de la gorge 251; lorsque le niveau de condensat dans le corps 21 atteint une hauteur prédéterminée, la boule 23, sous l'effet de la force due à la poussée d'Archimède, commence à flotter, et le condensat s'écoule par le conduit 232 dans la chambre d'entrée A; par contre, la boule 24 continue à isoler l'intérieur du corps 21 de la chambre de décharge A', puisque celle-ci est à la pression atmosphérique ou à celle du gazomètre, inférieure à celle de la chambre d'entrée A.

En dépression bloquée (par la pression atmosphérique ou par celle du gaz contenu dans le gazomètre) ou pilotée, la chambre supérieure B est à la pression atmosphérique (ou éventuellement en surpression), tandis que la chambre d'entrée A est en dépression; dans ces conditions, l'intérieur du corps 21 est à la pression atmosphérique ou également en surpression, la dépression dans la chambre d'entrée A ayant plaqué la boule 23 au fond de son logement 231; pour les mêmes raisons que dans le cas décrit précédemment, lorsque le condensat dans le conduit 222 atteint dans ce conduit une hauteur prédéterminée, ledit condensat pénètre à l'intérieur du corps 21, et s'en échappe cette fois par le conduit 242 lorsqu'il atteint un certain niveau, du fait de la poussée d'Archimède sur la boule 24; cette fois, la boule 23 continue à isoler l'intérieur du corps 21 de la chambre d'entrée A, puisque celle-ci est en dépression.

On remarque que cette structure permet également d'éviter les retours à travers le corps 21 grâce à la boule 22, qui permet l'obturation de l'orifice du conduit 222 débouchant dans le logement 221, et qui constitue aussi une sorte de clapet anti-retour.

Bien entendu, le choix de la hauteur h de condensat dans le conduit 222, de la section s de l'orifice du conduit 222 dans le logement 221, et de la masse m des boules notamment sont conditionnés par les caractéristiques du fluide contenu dans l'enceinte et, en particulier par la masse spécifique de son condensat, et il en est de même des autres dimensions du corps 21, afin d'obtenir d'une part la pression désirée pour le soulèvement de la boule 22 et d'autre part la flottabilité des deux autres boules dans les conditions recherchées; il fait noter que la nature du matériau constituant les boules doit être choisie non seulement en fonction de la masse spécifique désirée, mais également de la température et des caractéristiques mécaniques recherchées (dureté en particulier, de façon à éviter d'une part que leur propre usure soit trop rapide, et d'autre part qu'elles détériorent la région du corps 21 où elles sont amenées à reposer). Pour de l'hexane, on a de bons résultats avec des organes en téflon, creux, sphériques ou cylindriques.

Bien que la description ci-dessus corresponde à des soupapes de sûreté appliquées au conditionnement de l'hexane, il est possible d'envisager des soupapes selon l'invention destinées à d'autres fluides (vapeur par exemple), moyennant un certain nombre de modifications quant aux dimensions des organes et à la nature des matériaux, car, bien entendu, l'invention n'est pas limitée à la forme de réalisation ci-dessus décrite et représentée, à partir de laquelle on pourra prévoir d'autres formes de réalisation, sans pour autant sortir du cadre de l'invention.

## Revendications

1. Soupape, destinée à fonctionner en présence d'un fluide susceptible de former un condensat, comportant des chambres (B, A, A') dont au moins une (B) d'où le condensat doit être évacué, et muni à cet effet d'un dispositif de récupération de condensats (2), les dites chambres (B, A, A') en fonction de la pression qui régne dans chacune d'elles pouvant être au moins temporairement séparées et/ou isolées par dés moyens d'obturation tel qu'un obturateur (1) porté par un diaphragme (4), soupape caractérisée en ce que le dispositif de récupération de condensats (2) est fixé aux moyens d'obturation (1, 4) et comporte un corps (21) et des organes formant clapets (22, 23, 24) logés chacun à l'intérieur d'une cavité (221, 231, 241) du corps, ces cavités (221, 231, 241) communiquant entre elles par une gorge (251) creusée dans le corps (21), et étant reliées par des conduits respectifs (222, 232, 242) débouchant à leur partie inférieure chacune à une des dites chambre (B, A, A'), les dits organes formant clapets (22, 23, 24) empêchant toute communication entre les cavités (221, 231, 241) et le conduit (222, 232, 242) correspondant en l'absence de condensat à évacuer, de telle sorte que, lorsque le niveau de condensat dans le conduit (222) relié à la chambre (B) d'où le condensat doit être évacué atteint une hauteur prédéterminée, la pression due à cette hauteur de condensat soulève l'organe formant clapet (22) se trouvant dans la cavité correspondante (221) et permette l'introduction de condensat dans les cavités (221, 231, 241) et la gorge (251) du corps (21), et que lorsque le niveau de condensat atteint dans le corps (21) une hauteur fixée, la force due à la poussée d'Archimède fasse flotter l'organe formant clapet (23, 24) dans la cavité (231, 241) reliée à la chambre (A, A') dans laquelle la pression est la moins faible, entraînant ainsi l'évacuation du condensat dans cette chambre (A, A').

2. Soupape selon la revendication 1, caractérisée en ce qu'elle comporte une chambre supérieure (B) au-dessus des moyens d'obturation (1, 4) et d'où tout condensat dépassant une certaine quantité doit être évacué, une première chambre d'évacuation (A) du condensat et une seconde chambre d'évacuation (A') du condensat, ces deux chambres d'évacuation (A, A') des condensats étant situées au-dessous des moyens d'obturation (1, 4).

3. Soupape selon la revendication 2, caractérisée en ce que la première chambre d'évacuation des condensats est la chambre d'entrée (A) de l'appareil, reliée à une enceinte à protéger, en ce que la seconde chambre d'évacuation des condensats est la chambre de décharge (A') de l'appareil, destinée à évacuer tout excès de gaz dans l'enceinte à protéger, et en ce que les moyens d'obturation (1, 4) sont mobiles entre une position de fermeture où ils isolent la chambre d'entrée (A) de la chambre de décharge (A') et une position d'ouverture maximale où ils mettent en pleine communication la chambre d'entrée (A) et la chambre de décharge (A').

4. Soupape selon la revendication 3, caractérisée en ce que, lorsque la chambre d'entrée (A) et la chambre supérieure (B) sont en surpression par rapport à la chambre de décharge (A') (fonctionnement en pression), l'organe formant clapet (22) correspondant à la chambre supérieure (B) et celui correspondant à la chambre d'entrée (A) se soulèvent quand a été formée une quantité déterminée de condensat dans la chambre supérieure (B) afin d'évacuer le condensat dans ladite chambre d'entrée (A).

5. Soupape selon la revendication 3, caractérisée en ce que, lorsque la chambre supérieure (B) et la chambre de décharge (A') sont à une pression supérieure à la chambre d'entrée (A) (fonctionnement en dépression), l'organe formant clapet (22) correspondant à la chambre supérieure (B) et celui correspondant à la chambre de décharge (A') se soulèvent quand a été formée une quantité déterminée de condensat dans la chambre supérieure (B) afin d'évacuer le condensat dans ladite chambre de décharge (A').

6. Soupape selon l'une quelconque des revendications 1 à 5, caractérisée en ce que les cavités (221, 231, 241) sont de forme générale cylindrique et réparties dans le corps (21) le long d'une circonférence, la gorge (251) étant elle-même creusée dans le corps (21) le long de cette circonférence, et en ce que les conduits (222, 232, 242) reliant les chambres (B, A, A') à une cavité (221, 231, 241) correspondante débouchent dans cette cavité (221, 231, 241) à la base de celle-ci.

7. Soupape selon l'une quelconque des revendications 1 à 6, caractérisée en ce que les organes formant clapets (22, 23, 24) ont une forme sphérique.

8. Soupape selon l'une quelconque des revendications 1 à 6, caractérisée en ce que les organes formant clapets (22, 23, 24) ont une forme générale cylindrique.

9. Soupape selon l'une quelconque des revendications 1 à 8, caractérisée en ce que les organes formant clapets (22, 23, 24) sont creux.

10. Soupape selon l'une quelconque des revendications 1 à 9, caractérisée en ce que les organes formant clapets (22, 23, 24), sont en téflon.

## Patentansprüche

1. Ventil zur Verwendung in Gegenwart eines zur Kondensatbildung neigenden Fluides, mit Kammern (B, A, A'), von denen aus mindestens einer (B) das Kondensat zu entfernen ist, und das zu diesem Zweck mit einer Kondensat-Ablaßeinrichtung (2) versehen ist, wobei die Kammern (B, A, A') in Abhängigkeit von dem in jeder von ihnen herrschenden Druck zumindestens zeitweilig durch ein aus einem durch eine Membran (4) gehaltenen Verschlußglied (1) bestehendes Verschlußmittel getrennt und/oder isoliert werden können, dadurch gekennzeichnet, daß die Kondensat-Ablaßeinrichtung (2) an dem Verschlußmittel (1, 4) befestigt ist und einen Körper (21) und jeweils im Inneren eines Hohlraumes (221, 231, 241) im Körper untergebrachte, Ventilklappen bildende Organe (22, 23, 24) enthält, wobei die Hohlräume (221, 231, 241) untereinander durch eine in dem Körper (21) ausgesparte Nut (251) verbunden und über sich jeweils in ihrem unteren Teil öffnende, zugeordnete Leitungen (222, 232, 242) an jeweils eine de Kammern (B, A, A') angeschlossen sind, daß die Klappen bildende Organe (22, 23, 24) jede Verbindung zwischen den Hohlräumen (221, 231, 241) und der jeweils entsprechenden Leitung (222, 232, 242) bei nichtvorhandendem abzulassendem Kondensat hindern derart, daß, wenn der Kondensatpegel in der an die Kammer (B), aus welcher das Kondensat zu entfernen ist, angeschlossenen Leitung (222) eine vorbestimmte Höhe erreicht, der durch die Kondensathöhe entstehende Druck das sich in dem zugeordneten Hohlraum (221) befindende, eine Klappe bildende Organ (22) anhebt und den Einlaß des Kondensates in die Hohlräume (221, 231, 241) und die Nut (251) des Körpers (21) zuläßt, und daß dann, wenn der Kondensatpegel in dem Körper (21) eine feste Höhe erreicht, die durch den Auftrieb erzeugte Kraft, das in dem mit der Kammer (A, A'), in der der Druck zumindestens schwach ist, verbundenen Hohlraum (231, 241) befindliche, eine Klappe bildende Organ (23, 24) schwimmen läßt und so die Entfernung des Kondensates in diese Kammer (A, A') mit sich bringt.

2. Ventil nach Anspruch 1, dadurch gekennzeichnet, daß eine obere Kammer (B) oberhalb des Verschlußmittels (1, 4) vorgesehen ist, aus der das gesamte, eine bestimmte Menge überschreitende Kondensat zu entfernen ist, daß eine erste Kondensat-Ablaßkammer (A) und eine zweite Kondensat-Ablaßkammer (A') vorgesehen ist, welche beide Kondensat-Ablaßkammern (A, A') unterhalb des Verschlußmittels (1, 4) gelegen sind.

3. Ventil nach Anspruch 2, dadurch gekennzeichnet, daß die erste Kondensat-Ablaßkammer die mit einem zu sichernden Bereich verbundene Einlaßkammer (A) des Gerätes ist und daß die zweite Kondensat-Ablaßkammer die zum Ablassen des gesamten Gasüberschusses in dem zu sichernden Bereich bestimmte Auslaßkammer (A') des Gerätes ist und daß das Verschlußmittel (1, 4) zwischen einer Schließstellung, in der es die Einlaßkammer (A) von der Auslaßkammer (A') trennt, und einer maximalen Öffnungsstellung, in der es eine volle Verbindung der Einlaßkammer (A) mit der Auslaßkammer (A') herstellt, bewegbar ist.

4. Ventil nach Anspruch 3, dadurch gekennzeichnet, daß dann, wenn die Eintrittskammer (A) und die obere Kammer (B) unter Überdruck im Vergleich zur Auslaßkammer (A') stehen (Druck-Betriebsart), das der oberen Kammer (B) entsprechende eine Ventilklappe bildende Organ (22) und das der Eintrittskammer (A) entsprechende sich anheben, sobald eine bestimmte Kondensatmenge in der oberen Kammer (B) gebildet ist, um das Kondensat in die Eintrittskammer (A) abzulassen.

5. Ventil nach Anspruch 3, dadurch gekennzeichnet, daß dann, wenn die obere Kammer (B) und die Ablaßkammer (A') unter einem höheren Druck als die Einlaßkammer (A) stehen (Druck- Absenkbetrieb), das der oberen Kammer (B) zugeordnete, eine Ventilklappe bildende Organ (22) und das der Ablaßkammer (A') entsprechende sich anheben, sobald eine bestimmte Kondensatmenge in der oberen Kammer (B) gebildet ist, um das Kondensat in die Auslaßkammer (A') abzulassen.

6. Ventil nach einem der Ansprüche 1 bis 5, dadurch gekennzeichnet, daß die Hohlräume (221, 231, 241) allgemein zylindrisch geformt und in dem Körper (21) in Umfangsrichtung verteilt sind, daß die Nut (251) längs des gleichen Umfangs in dem Körper (21) ausgebildet ist und daß die Leitungen (222, 232, 242) die Kammern (B, A, A') an einen entsprechenden Hohlraum (221, 231, 241) so anschließen, daß sie sich in den Hohlraum (221, 231, 241) an dessen Unterseite öffnen.

7. Ventil nach einem der Ansprüche 1 bis 6, dadurch gekennzeichnet, daß die Ventilklappen bildende Organe (22, 23, 24) eine Kugelform besitzen.

8. Ventil nach einem der Ansprüche 1 bis 6, dadurch gekennzeichnet, daß die Ventilklappen bildende Organe (22, 23, 24) allgemein zylindrische Form besitzen.

9. Ventil nach einem der Ansprüche 1 bis 8, dadurch gekennzeichnet, daß die Ventilklappen bildende Organe (22, 23, 24) hohl sind.

10. Ventil nach einem der Ansprüche 1 bis 9, dadurch gekennzeichnet, daß die Ventilklappen bildende Organe (22, 23, 24) aus Teflon bestehen.

## Claims

1. A valve intended for operation in the presence of a fluid liable to form condensate, comprising chambers B, A, A', at least one B of which has condensate to evacuate therefrom, and provided to this end with a device for recovering condensates 2, said chambers B, A, A' depending on the pressure in each of them being at least temporarily separable and/or isolatable from one another by closing means such as a closure 1 carried by a diaphragm 4, said valve being characterized in that the device for recovering condensates 2 is secured to the closing means 1, 4 and comprises a body 21 and flap valve members 22, 23, 24 each housed within a cavity 221, 231, 241 in the body, said cavities 221, 231, 241 communicating with one another through a throat 251 hollowed out in the body 21 and connected by respective conduits 222, 232, 242, each opening at their lower portion to one of said chambers B, A, A', said flap valve means 22, 23, 24 preventing communication between the cavities 221, 231, 241 and the respective conduits 222, 232, 242 in the absence of condensate to remove, in such way that when the condensate level in the conduit 222, connected to chamber B from which condensate must be removed, reaches a predetermined height, pressure resulting from the condensate high level lifts the flap valve means 22 lying in the respective cavity 221 and permits introduction of condensate into the cavities 221, 231, 241 and the throat 251 in the body 21, and that when the level of condensate reaches a fixed height in the body 21, the force resulting from Archimedes' principle makes the flap valve means 23, 24, float in the cavity 231, 241 connected to the chamber A, A' in which pressure in higher, thereby causing removal of the condensate from said chamber A, A'.

2. A valve according to claim 1, characterized in that it comprises an upper chamber B above the closing means 1, 4 and from which any condensate of a certain quantity must be removed, a first chamber A for removing condensate and a second chamber A' for removing condensate, both removal chambers A, A' for condensates lying under the closing means 1, 4.

3. A valve according to claim 2, characterized in that the first chamber for removal of condensates is the inlet chamber A of the apparatus, connected to an enclosure to be protected, in that the second condensate removal chamber is the outlet chamber A' of the apparatus intended for evacuation of any excess of gas in the enclosure to be protected and in that the closing means 1, 4 are movable between a closed position wherein the inlet chamber A is insulated from the discharge chamber A' and a maximum opening position wherein they fully communicate the inlet chamber A with the discharge chamber A'.

4. A valve according to claim 3, characterized in that when the inlet chamber A and the upper chamber B are in over-pressure conditions with respect to the discharge chamber A' (operation in pressure), the flap valve means 22 corresponding to the upper chamber B and that corresponding to the inlet chamber A are lifted when a determined quantity of condensate is formed in the upper chamber B, so as to remove condensate from said inlet chamber A.

5. A valve according to claim 3, characterized in that when the upper chamber B and the discharge chamber A' are under pressure higher than that in the inlet chamber A (operation in low pressure), the flap valve means 22 corresponding to the upper chamber B and that corresponding to the discharge chamber A' are lifted when a determined quantity of condensate is formed in the upper chamber B so as to evacuate condensate in said discharge chamber A'.

6. A valve according to any of claims 1 to 5, characterized in that cavities 221, 231, 241 of a general cylindrical shape are distributed in the body 21 along a circumference, throat 251 being itself hollowed out in the body 21 along such circumference and in that the conduits 222, 232, 242 connecting the chambers B, A, A' to a respective cavity 221, 231, 241 open into such cavity 221, 231, 241 at the basis thereof.

7. A valve according to any of claims 1 to 6, characterized in that the flap valve means 22, 23, 24 have a spherical shape.

8. A valve according to any of claims 1 to 6, characterized in that the flap valve means 22, 23, 24 have a general cylindrical shape.

9. A valve according to any of claims 1 to 8, characterized in that the flap valve means 22, 23, 24 are hollow.

10. A valve according to any of claims 1 to 9, characterized in that the flap valve means 22, 23, 24 are made of teflon.

FIG.1

0 008 257

0 008 257

FIG.2

FIG.3